Europäisches Patentamt

European Patent Office

Office européen des brevets

(19)

(11) Numéro de publication: **0 125 156 B1**

(12) **FASCICULE DE BREVET EUROPEEN**

(45) Date de publication du fascicule du brevet:
**22.06.88**

(51) Int. Cl.⁴: **G 06 F 7/52**

(21) Numéro de dépôt: **84400657.7**

(22) Date de dépôt: **03.04.84**

(54) **Multiplieur du type en cascade utilisant un ensemble d'opérateurs élémentaires.**

(30) Priorité: **06.04.83 FR 8305600**

(43) Date de publication de la demande:
**14.11.84 Bulletin 84/46**

(45) Mention de la délivrance du brevet:
**22.06.88 Bulletin 88/25**

(84) Etats contractants désignés:
**DE GB IT NL**

(56) Documents cités:
**US - A - 4 065 666**
**US - A - 4 122 527**
**US - A - 4 130 878**

**IEEE JOURNAL OF SOLID-STATE CIRCUITS, vol. SC-18, no. 2, avril 1983, pages 204-210, IEEE, New York, US; H. YAMAUCHI et al.: "10 ns 8 x 8 multiplier LSI using super self-aligned process technology"**
**NACHRICHTEN ELEKTRONIK, vol. 36, no. 3, mars 1982, pages 106-119, Heidelberg, DE; V. LEESEMANN: "Seriell/Parallel-Multiplizierer für die digitale Signalverarbeitung, Teil 2"**

(73) Titulaire: **THOMSON-CSF, 173, Boulevard Haussmann, F-75379 Paris Cédex 08 (FR)**

(72) Inventeur: **Muller, Bernard-Pierre, THOMSON-CSF SCPI 173, bld Haussmann, F-75379 Paris Cedex 08 (FR)**
Inventeur: **Charlec, Jean-Paul, THOMSON-CSF SCPI 173, bld Haussmann, F-75379 Paris Cedex 08 (FR)**

(74) Mandataire: **Benoit, Monique et al, THOMSON-CSF SCPI 19, avenue de Messine, F-75008 Paris (FR)**

**Description**

La présente invention se rapporte aux multiplieurs du type en cascade utilisant un ensemble d'opérateurs élémentaires du même type. Chacun de ces opérateurs élémentaires permet d'effectuer très rapidement la multiplication d'un nombre binaire (multiplicande) par une petite partie d'un autre nombre binaire (multiplicateur). En les associant en cascade, selon la structure connue sous le nom anglo-saxon de «pipeline», on obtient en sortie du dernier étage de cette structure le produit complet du multiplicande par le multiplicateur.

Il est connu du brevet US-A 4 122 527 un multiplieur rapide avec report de retenue n'induisant pas de retard dans le calcul.

Il est connu de brevet US-A 4 130 878 un multiplieur modulaire comportant un dispositif avec report de retenue n'induisant pas de retard dans le calcul.

Il est connu du brevet US-A 4 065 666 de réaliser un multiplieur modulaire utilisant des registres à décalage associés à un additionneur. L'association d'opérateurs élémentaires permet de traiter des mots comportant un nombre de bits important multiple du nombre de bits susceptibles d'être traités par un opérateur unique.

Le problème de la multiplication en binaire est rendu compliqué par l'usage – quasi général – de la représentation des nombres négatifs en complément à deux.

Dans son ouvrage «Automatic Digital Calculators» (London, Butterworths Scientific Publications, 1953) Booth a décrit un algorithme qui permet de résoudre ce problème en procédant à une suite d'opérations élémentaires entre le multiplicande et chacun des bits successifs du multiplicateur, compte tenu de la valeur du bit précédent.

Cet algorithme a depuis été généralisé pour pouvoir diviser le multiplicateur en groupes de bits et non plus en bits isolés. Un tel groupement complique bien entendu les opérations, et ceci d'autant plus que le nombre de bits groupés est important. Aussi dans la pratique on se contente de diviser le multiplicateur en groupes de deux bits.

Un opérateur élémentaire permettant d'effectuer une multiplication 7 x 2 avec conservation du signe, a été décrit dans la demande de brevet EP-A 0 112 768 et dont les éléments suivants sont repris pour la compréhension de l'invention.

Selon l'algorithme de Booth, une multiplication partielle de rang j entre un multiplicande X et un groupe de deux bits $Y_{2j+1}$ $Y_{2j}$ du multiplicateur, se fait en ajoutant au résultat intermédiaire précédent $I_{j-1}$ l'un des cinq nombres 0, X, 2X, −X, −2X, et en décalant de deux bits vers la droite le résultat $S_j$ de cette opération pour obtenir un nouveau résultat intermédiaire $I_j$. Le choix entre ces cinq nombres se fait selon la valeur des deux bits $Y_{2j+1}$, $Y_{2j}$, et du bit $Y_{2j-1}$ de groupe précédent, selon la table suivante:

| $Y_{2j+1}$ | $Y_{2j}$ | $Y_{2j-1}$ | Nombre à ajouter |
|---|---|---|---|
| 0 | 0 | 0 | 0 |
| 0 | 0 | 1 | X |
| 0 | 1 | 0 | X |
| 0 | 1 | 1 | 2X |
| 1 | 0 | 0 | −2X |
| 1 | 0 | 1 | −X |
| 1 | 1 | 0 | −X |
| 1 | 1 | 1 | 0 |

En traduisant cette table en fonctions logiques on obtient:

$$S_j = I_{j-1} \cdot \overline{A} \, U \, A \, [(I_{j-1} + X)(B \cdot \overline{C}) U (I_{j-1} + 2X)$$
$$(\overline{B} \cdot \overline{C}) U (I_{j-1} - X)(B \cdot C) U (I_{j-1} - 2X)(\overline{B} \cdot C)]$$

avec:

$$A = (Y_{2j} \oplus Y_{2j-1}) U (Y_{2j+1} \oplus Y_{2j})$$
$$B = (Y_{2j} \oplus Y_{2j-1})$$
$$C = Y_{2j+1}$$

Dans ces expressions $\oplus$ désigne l'opérateur OU-exclusif.

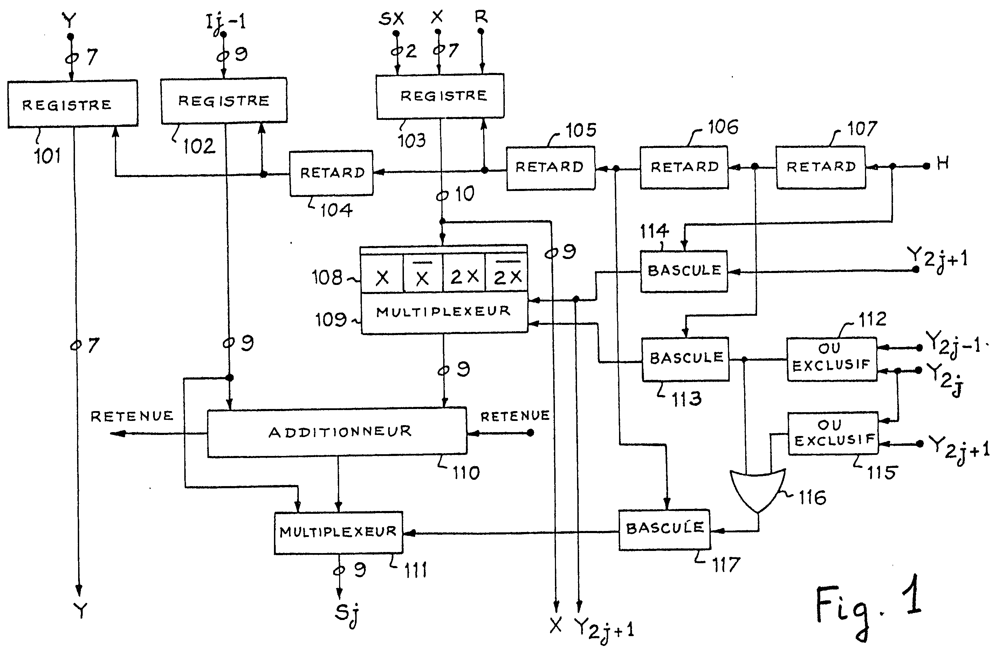

L'opérateur élémentaire représenté sur la figure 1 permet de réaliser une telle multiplication partielle entre un nombre X comportant sept bits (dont le signe) et deux bits $Y_{2j+1}$ et $Y_{2j}$ d'un nombre Y, soit une multiplication 7 x 2 avec conservation du signe.

L'opérateur de la figure 1 comprend trois registres d'entrée 101, 102, 103 qui permettent de recevoir les données en entrée.

Le registre 101 comprend sept cases qui permettent tout d'abord de mémoriser les bits de poids forts de Y non utilisés dans l'opérateur j ni dans ceux qui le précèdent. Les cases libérées par l'utilisation des bits de Y permettent de mémoriser les bits de poids faibles de la somme $S_j$, qui n'interviennent plus dans les calculs partiels ultérieurs par suite du décalage à droite dans l'algorithme de Booth.

Le registre est muni d'une sortie sur laquelle on trouve une recopie de l'entrée après le pas d'horloge H appliqué au registre par quatre dispositifs de retard 104 à 107 en série destinés à améliorer le comportement du circuit. Pour simplifier, la figure représente le cas où l'on a en entrée, et donc en sortie, du registre les six bits de poids forts de Y.

Le registre 102 comprend neuf cases qui permettent de mémoriser les neuf bits de poids forts du résultat intermédiaire $I_{j-1}$. Celui-ci est obtenu par décalage de deux bits vers la droite de la somme $S_{j-1}$ en sortie de l'étage précédent et adjonction de deux bits de poids forts égaux au bit de poids fort de $S_{j-1}$. Les deux bits de poids faibles qui débordent dans ce décalage sont rangés dans le registre 101 où ils remplacent $Y_{2j}$ et $Y_{2j+1}$ qui arrivent dans l'opérateur par d'autres entrées. Le registre 102 est aussi muni d'une sortie qui recopie son entrée sous la commande de H en sortie du dispositif à retard 104.

Ces différents décalages sont obtenus par câblage entre les deux opérateurs mis en cascade pour former deux étages successifs d'un multiplieur complet.

Le registre 103 comprend dix cases qui permettent de mémoriser les sept bits du nombre X, ainsi que trois bits supplémentaires. Ces bits supplémentaires comprennent un bit de poids faible, dit de recoupe. Les deux autres bits supplémentaires sont deux bits de poids forts qui recopient le bit de signe de X et permettent lors des opérations de garder ce signe. En effet l'opération 2X (ou −2X) se traduit par un décalage d'un bit à gauche, et il est de plus nécessaire de prévoir le cas où l'addition des signes délivre une retenue et donc nécessite encore un autre bit à gauche. Ce registre 103 est également muni d'une sortie qui recopie son entrée sous la commande de H en sortie du dispositif à retard 105.

Cette sortie du registre 103 est appliquée à un dispositif de calcul 108 suivi d'un multiplexeur 109. Ce dispositif de calcul effectue sur l'ensemble des dix bits les opérations X (transfert direct), $\overline{X}$ (complémentation bit à bit de X), 2X (décalage d'un bit à gauche), et $2\overline{X}$ (complémentation suivie d'un décalage à gauche). Le multiplexeur 109 sélectionne le résultat de l'une de ces quatre opérations sous la commande de deux signaux binaires qui représentent respectivement $Y_{2j+1}$ et B. Ces signaux sont obtenus d'une manière décrite plus loin. Le multiplexeur est conçu pour ne sélectionner que les neuf bits de poids fort en éliminant ainsi le bit de recoupe qui a servi dans la multiplication par 2 et qui n'est plus utile ensuite.

Le nombre en sortie du multiplexeur 109 est additionné à $I_{j-1}$, disponible en sortie du registre 102, dans un additionneur de neuf bits 110. Cet additionneur est muni d'une entrée et d'une sortie de retenue. Pour l'usage de l'opérateur en multiplieur 7 x 2 on applique, par câblage externe, le bit $Y_{2j+1}$ sur l'entrée de retenue de l'additionneur. En effet, comme on peut le voir dans le tableau ci-dessus définissant l'algorithme de Booth, l'addition de −X et −2X est à faire seulement lorsque $Y_{2j+1} = 1$. Comme on dispose de $\overline{X}$ et $2\overline{X}$, en sortie du multiplexeur 109 dans ce cas, le fait de rajouter 1 par l'entrée de retenue donne bien −X et −2X en complément à 2, qui est le code utilisé.

La sortie d l'additionneur, ainsi que $I_{j-1}$, sont appliqués à un multiplexeur 111 qui sélectionne l'un de ces deux signaux sous la commande du signal A, obtenu de la manière expliquée plus loin, et délivre le signal $S_j$.

Les deux bits $Y_{2j-1}$ et $Y_{2j}$, en provenance de l'étage précédent, sont appliqués à une porte OU-exclusif 112 qui délivre le signal B défini plus haut. Ce signal B est mémorisé dans une bascule maître-esclave 113 pour être appliqué au multiplexeur 109. Cette bascule est commandée par l'horloge H en sortie du dispositif à retard 107.

Le bit $Y_{2j+1}$ en provenance de l'étage précédent est mémorisé dans une bascule maître-esclave 114 pour être appliqué au multiplexeur 109. Cette bascule est commandée par l'horloge H directement.

Les deux bits $Y_{2j}$ et $Y_{2j+1}$ sont également appliqués à une porte OU-exclusif 115 dont la sortie est connectée à une porte OU 116. L'autre entrée de cette porte reçoit le signal B, et sa sortie délivre le signal A défini plus haut. Ce signal A est mémorisé dans une bascule maître-esclave 117 pour être appliqué au multiplexeur 111. Cette bascule est commandée par l'horloge H en sortie du dispositif à retard 106.

Les signaux X et $Y_{2j+1}$, nécessaires pour l'étage suivant, sont disponibles en sortie du registre 103 et de la bascule 114, avec le retard d'un pas d'horloge qui correspond au chargement du registre et de la bascule. Il en est de même pour les signaux $Y_{2j+2}$ et $Y_{2j+3}$ (contenus dans Y) et $S_j$. Pour simplifier la figure on a représenté X sur neuf bits, ce qui inclut les deux bits de signe SX. Par contre le bit de recoupe R n'est pas disponible, parce qu'il n'y a pas d'utilité à le transmettre.

Un tel opérateur peut être intégré dans un circuit intégré prédiffusé du commerce, contenu dans un seul boîtier.

En cascadant quatre de ces circuits intégrés on obtient, avec seulement quatre boîtiers, un multiplieur 7 x 8 avec conservation du signe sans aucun circuit supplémentaire. Le résultat sera obtenu avec un retard de quatre coups d'horloge, mais la vitesse de sortie de ces résultats sera égale à celle d'un multiplieur parallèle.

Une multiplication 7 x 8 est toutefois relativement limitée, et il est souhaitable de pouvoir effectuer des calculs plus importants, tout en gardant la vitesse de sortie et en ayant une structure la plus modulaire possible.

La présente invention permet de simplifier la construction d'un multiplieur utilisant un ensemble d'opérateurs élémentaires.

Pour cela, l'invention propose un multiplieur selon la revendication 1.

D'autres particularités et evantages de l'invention apparaîtront clairement dans la description suivante présentée a titre d'exemple non limitatif et faite en regard des figures annexées qui représentent:

– la figure 1, le schéma d'un opérateur connu de la demande de brevet EP-A 0 112 768;
– la figure 2, un premier étage d'un multiplieur en cascade;
– la figure 3, l'interconnexion entre un premier et un deuxième étage d'un multiplieur en cascade.

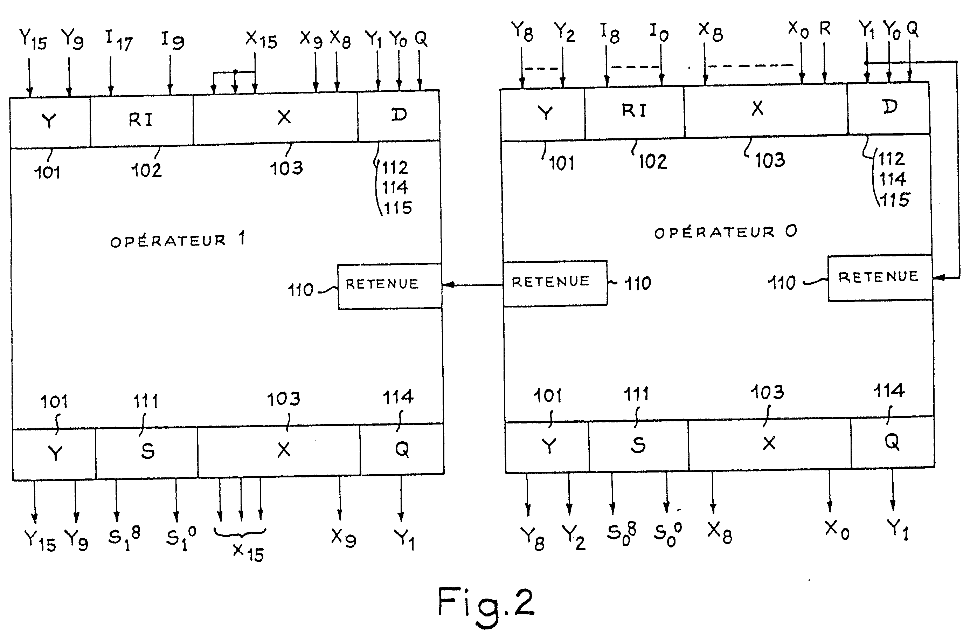

Pour faciliter la description, on a représenté sur la figure 2 le premier étage d'un multiplieur 16 x 16 entre deux nombres entiers signés. Ce multiplieur réalise donc une multiplication 16 x 2 entre un nombre X comprenant 16 bits $X_0$ à $X_{15}$, et les deux premiers bits $Y_0$ et $Y_1$ d'un nombre Y comprenant 16 bits $Y_0$ à $Y_{15}$.

Cet étage comprend deux opérateurs identiques numérotés 0 et 1. Le schéma interne de ces opérateurs est celui de la figure 1 et pour faciliter la compréhension du dessin on a représenté schématiquement les circuits en entrée et en sortie en séparant en deux parties certains d'entre eux (X, Y, 110).

Ces deux opérateurs fonctionnent en parallèle pour multiplier chacun une moitié du multiplicande X par les deux bits de poids faible du multiplicateur Y.

Pour cela l'opérateur 0, qui travaille sur les poids faibles du multiplicande, reçoit sur son registre d'entrée X les neuf bits de poids faible $X_0$ à $X_8$ appliqués sur les entrées du registre X autres que celle de recoupe. L'entrée R du bit de recoupe est maintenue à zéro pour avoir en cas de décalage à gauche un bit de poids faible à zéro.

L'opérateur 0 reçoit également sur son registre d'entrée RI les neuf bits de poids faible $I_0$ à $I_8$ du résultat intermédiaire de l'étage précédent, qui dans ce cas sont à zéro puisque nous décrivons le premier étage.

Il reçoit aussi sur son registre d'entrée Y les sept bits de poids faible $Y_2$ à $Y_8$ qui ne sont pas utilisés pour la multiplication, et sont simplement transmis sur la sortie de ce registre pour être appliqués à l'étage suivant.

Les deux premiers bits de poids faible $Y_0$ et $Y_1$ du multiplicateur (effectivement utilisés dans cet étage) sont appliqués aux divers circuits de décodage détaillés sur la figure 1 et rassemblés sur la figure 2 dans un circuit d'entrée appelé D. $Y_1$ est également appliqué à l'entrée de retenue de l'additionneur de l'opérateur 0.

Le circuit D devrait recevoir également un bit $Y_{-1}$. Comme celui-ci n'existe pas, on lui substitue un bit Q qui est maintenu à zéro.

En sortie de l'opérateur 0 on trouve, outre $Y_2$ à $Y_8$ déjà neuf bits de poids faible $X_0$ à $X_8$ en sortie du registre X, les neuf bits de poids faible $S_0^0$ à $S_0^8$ du résultat de la multiplication 16 x 2 en sortie du multiplexeureur 111 appelé S sur la figure, et le bit $Y_1$ en sortie de la bascule 114 appelée Q sur la figure puisque ce bit va jouer pour l'étage suivant le rôle du bit Q.

On a également en sortie de l'opérateur 0 la retenue de l'additionneur de celui-ci.

L'opérateur 1, qui travaille sur les poids forts du multiplicande, reçoit sur son registre d'entrée X les huit bits de poids fort $X_8$ à $X_{15}$. $X_9$ à $X_{15}$ sont appliqués sur les sept entrées de poids faible et $X_{15}$, qui représente le signe, est recopié sur les deux entrées de poids fort pour les raisons données dans la description de l'opérateur. $X_8$ est appliqué à l'entrée du bit de recoupe, ce qui explicite plus particulièrement l'intérêt de ce bit. En effet si l'on effectue un décalage à gauche (représentant une multiplication par 2), il faut disposer du bit précédent à droite puisque ce décalage s'opère sur la totalité du nombre, lequel est présent en deux morceaux dans les deux opérateurs.

L'opérateur 1 reçoit également sur son registre d'entrée RI les neuf bits de poids fort $I_9$ à $I_{17}$ (dans ce cas à zéro), et sur son registre d'entrée Y les sept bits de poids fort $Y_9$ à $Y_{15}$, qui sont transmis sur la sortie de ce registre.

Pour effectuer la multiplication, les bits $Y_0$ et $Y_1$, ainsi que Q, sont appliqués à l'opérateur 1 de la même manière qu'à l'opérateur 0, sauf pour la retenue entrante qui reçoit le bit de retenue sortante de l'opérateur 0, ce qui assure la continuité entre les deux morceaux de la multiplication.

En sortie de cet opérateur 1 on trouve, outre $Y_9$ à $Y_{15}$ déjà vus, les sept bits de poids fort $X_9$ à $X_{15}$ et les deux bits de signe supplémentaires, les neuf bits de poids fort $S_1^0$ à $S_1^8$ du résultat de la multiplication 16 x 2, et le bit $Y_1$. La sortie de retenue est disponible, mais n'est pas utile ici puisqu'elle représente le signe du résultat, lequel est déjà contenu au moins une fois dans le nombre sortie de S.

Pour effectuer une multiplication avec un multiplicateur de plus de deux bits, il faut mettre en cascade plusieurs étages identiques à celui de la figure 2, avec un câblage inter-étage adéquat pour obtenir notamment les décalages nécessaires et ranger résultats qui débordent.

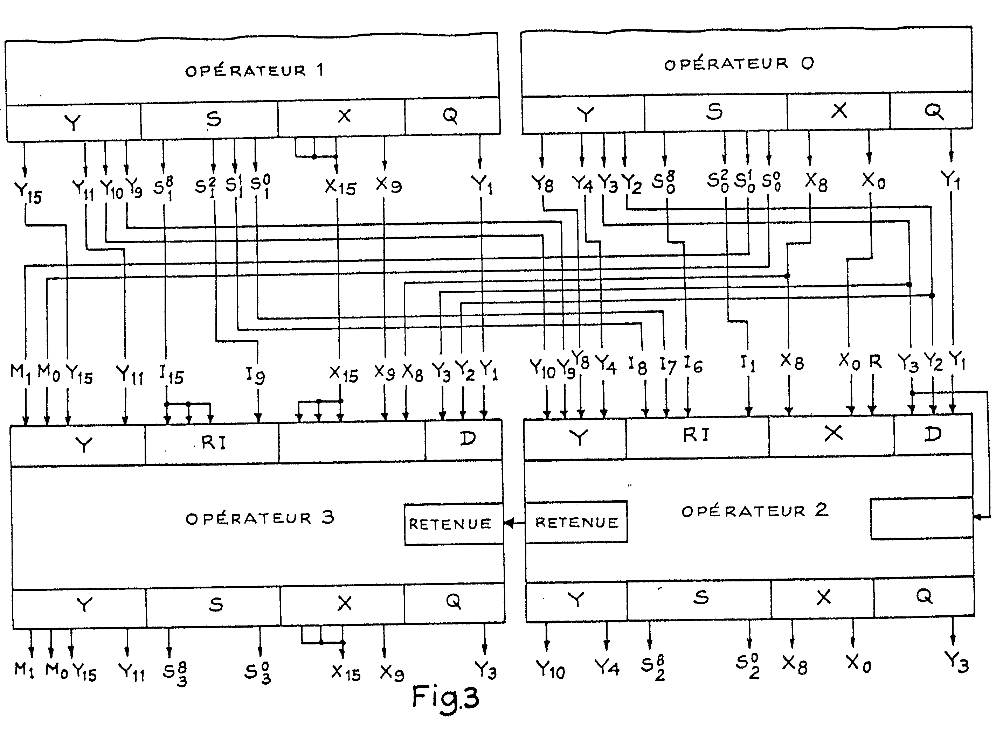

On a représenté sur la figure 3 la mise en cascade d'un deuxième étage comprenant deux opérateurs 2 et 3, avec le premier étage de la figure 1, représenté partiellement, pour pouvoir effectuer une multiplication 16 x 4.

Ce deuxième étage utilise donc les trois bits $Y_1$ à $Y_3$ du multiplicateur, qui sont appliqués sur les circuits D des deux opérateurs, avec $Y_3$ appliqué en plus à l'entrée de retenue de l'opérateur 2. $Y_2$ et $Y_3$ sont pris en sortie du registre Y de l'opérateur 0, et dans la version représentée $Y_1$ en sortie respectivement des deux circuits Q des opérateurs 0 et 1. Des variantes éventuelles consisteraient à relier la sortie de l'une de ces circuits Q aux deux entrées correspondantes des circuits D.

Les sorties des registres X du premier étage sont directement reliées aux entrées des registres X du deuxième étage, puisque le multiplicande est transmis sans changement le long des étages avec simplement le retard dû à chaque étage. De même l'entrée R de l'opérateur 2 est maintenue à zéro.

Dans une multiplication à plusieurs chiffres (plusieurs bits pour un nombre binaire), le résultat intermédiaire correspondant à la multiplication par un chiffre du multiplicateur doit être décalé d'un chiffre vers la droite avant d'être additionné au résultat intermédiaire suivant. Donc le nombre formé des bits $S_0^0$ à $S_1^8$ doit être décalé de deux bits vers la droite (puisque le premier étage a utilisé deux bits du multiplicateur) pour être transmis au deuxième étage.

Pour cela on stocke les deux bits $S_0^0$ et $S_0^1$ qui forment les deux bits de poids faible $M_0$ et $M_1$ du résultat final, dans les deux étages de poids fort du registre Y de l'opérateur 3, en réunissant les entrées et sorties correspondantes. Ces deux étages sont libérées en décalant le multiplicande de deux bits vers la droite, en connectant d'abord les sorties $Y_{11}$ à $Y_{15}$ de l'opérateur 1 aux cinq entrées de poids faible du registre Y de l'opérateur 3, puis en connnectant les sorties $Y_{10}$ et $Y_9$ de cet opérateur 1, et $Y_8$ à $Y_4$ de l'opérateur 0, aux entrées du registre Y de l'opérateur 2. On a vu plus haut que $Y_3$ et $Y_2$ sont utilisés dans les circuits D pour le calcul, et n'ont donc plus à être transmis aux registres Y du deuxième étage.

On a donc $Y_4$ à $Y_{10}$ disponibles en sortie du registre Y de l'opérateur 2, et $Y_{11}$ à $Y_{15}$ avec $M_0$ et $M_1$ en sortie du registre Y de l'opérateur 3. Par ailleurs $Y_3$ (nécessaire pour le troisième étage) est disponible en sortie des deux circuits Q du deuxième étage, comme on l'a vu.

Les bits $S_0^2$ à $S_0^8$ deviennent donc les bits de résultat intermédiaire $I_0$ à $I_6$, et les bits $S_1^0$ à $S_1^8$ les bits intermédiaires $I_7$ à $I_{15}$. $I_0$ à $I_8$ sont appliqués au registre d'entrée RI de l'opérateur 2, et $I_9$ à $I_{15}$ au registre d'entrée RI de l'opérateur 3. Comme $I_9$ à $I_{15}$ ne représentent que sept bits, $I_{15}$ est également recopié sur les deux entrées de poids fort de ce dernier registre.

Le résultat de la multiplication 16 x 4 effectuée par ces deux étages est composé des deux bits de poids faible $M_0$ et $M_1$ déjà vus, et des 18 bits de poids fort $S_2^0$ à $S_2^8$ et $S_3^0$ à $S_3^0$ à $S_3^8$ disponibles en sortie des registres S des deux opérateurs du second étage.

Pour obtenir une multiplication complète de deux nombres de 16 bits entre eux, il faut six étages supplémentaires par rapport aux deux déjà décrits.

Entre deux étages successifs j et j+1 le nombre X est transmis sans changement, comme décrit entre les deux premiers.

Les deux bits $Y_{2j+3}$ et $Y_{2j+2}$ nécessaires pour la multiplication dans l'étage j+1, sont pris en sortie du registre Y de l'opérateur j de poids faible, et l'ensemble des bits restants de Y, ainsi que les bits de résultat M déjà obtenus, sont décalés à droite de deux pas pour être appliqués en entrée des registres Y de l'étage j+1. Ceci libère à gauche la place pour les deux nouveaux bits de poids faible du résultat en sortie des circuits S de l'étage j.

Les seize bits restants en sortie des circuits S de l'étage j sont décalés à droite de deux pas pour être aux registres RI de l'étage j+1, et celui de poids fort est appliqué également aux deux entrées de RI ainsi libérées.

Il est remarquable que cette règle de câblage, identique entre tous les étages, conduise à remplacer pas à pas le nombre Y par le nombre M représentant les poids faibles du résultat final de la multiplication 16 x 16. En sortie du dernier étage on aura donc le résultat de la multiplication, avec les 14 bits de poids faible dans les deux registres Y du dernier étage, et les 18 bits de poids fort dans les deux registres S de celui-ci, soit donc 32 bits, nombre maximum pour un produit 16 x 16.

Il est aisé en effectuant pas à pas à la main les calculs correspondant aux huit étages successifs de montrer que le résultat est toujours correct, un particulier quant à la conservation du signe pour les produits extrêmes concernant les plus grands nombres positifs et négatifs.

## Revendications

1. Multiplieur du type en cascade utilisant un ensemble d'opérateurs élémentaires, chaque opérateur élémentaire ayant un premier registre Y (101) pour recevoir et délivrer um premier signal d'au moins deux bits, un deuxième registre RI (102) pour recevoir un signal intermédiaire de n bits, un troisième registre X (103) pour recevoir un signal multiplicande de n bits et un bit de recoupe et délivrer ce signal multiplicande, des circuits de décodage D et Q (112–117) pour recevoir un signal multiplicateur de trois bits et délivrer le bit de poids fort de ce signal, un additionneur (110) muni d'une entrée de retenue et d'une sortie de retenue, et un circuit S (111) pour délivrer un signal de multiplication de neuf bits obtenu selon l'algorithme de Booth entre le multiplicande, le signal intermédiaire et le multiplicateur, caractérisé en ce que chaque opérateur comporte des moyens de calcul (108) permettant d'effectuer les multiplications partielles sur des groupes de bits selon l'algorithme de Booth connecté à un multiplexeur (109) permettant de sélectionner le résultat partiel nécessaire à la réalisation du calcul total selon ledit algorithme et un additionneur (110) muni d'une entrée et d'une sortie de retenue et en ce que pour effectuer au moins une multiplicande de 2 (n−1) bits et un multiplicateur de quatre bits, il comprend un premier étage comportant un premier opérateur (0) et un deuxième opérateur (1) et un deuxième étage comportant un troisième opérateur (2) et un quatrième opérateur (3), que le bit de recoupe et le bit de poids faible du signal multiplicateur du premier opérateur sont à zéro, que les deux autres bits de ce signal multiplicateur sont les deux bits de poids faible du multiplicateur, que le bit de poids le plus fort de ceux-ci est appliqué à l'entrée de retenue du premier opérateur, que le signal multiplicateur du deuxième opérateur est le même que celui du premier, que le registre X du premier opérateur reçoit les n bits de poids faible du multiplicande, que le bit de recoupe du deuxième opérateur recopie le bit de poids fort reçu par ce registre X, que le registre X du deuxième opérateur reçoit les autres bits du multiplicande dont celui de poids fort est recopié deux fois, que le signal intermédiaire du premier étage est égal à zéro, que le registre Y du premier opérateur reçoit les deux bits de poids fort du multiplicateur, que la sortie de retenue du premier opérateur est reliée à l'entrée de retenue du deuxième opérateur, que les circuits D du troisième et du quatrième opérateur reçoivent du registre Y du premier opérateur les deux bits de poids fort du multiplicateur et d'un circuit Q du premier étage de poids faible précédant ces deux bits, que l'entrée de retenue du troisième opérateur reçoit le bit de poids fort du multiplicateur, que le multiplicande est transmis directement entre les sorties des circuits X des premier et deuxième opérateurs et les entrées des circuit X des troisième et quatrième opérateurs, que le bit de recoupe du troisième opérateur est maintenu à zéro et celui du quatrième opérateur recopie le bit de poids fort du registre X du troisième opérateur, que les deux bits de poids faible du signal de multiplication du premier opérateur sont transmis aux deux entrées de poids fort du registre Y du quatrième opérateur, que les autres bits de ce signal de multiplication ainsi que le signal de multiplication du deuxième opérateur sont transmis aux registres RI du deuxième étage avec décalage à droite et double répétition du bit de poids fort, que les (m−4) sorties de poids fort du registre Y du premier opérateur et les sorties du registre Y du deuxième opérateur sont reliées aux entrées du registre Y du troisième opérateur et aux (m−4) entrées de poids faible du registre Y du quatrième opérateur, et que la sortie de retenue du troisième opérateur est reliée à l'entrée de retenue du quatrième opérateur.

2. Multiplieur selon la revendication 1, caractérisé par le fait que ledit multiplieur peut effectuer une multiplication entre un multiplicande de 2 (n−1) bits, n étant le nombre de bits traités par un opérateur élémentaire et un multiplicateur de 16 bits, comrenant huit étages ayant chacun deux opérateurs, que les registres Y peuvent mémoriser au moins sept bits, et que les liaisons entre ces étages sont identiques à celle entre les deux premiers étages; le résultat de la multiplication étant donné sur 14 bits de poids faibles dans les registres Y du dernier étage, et sur de 2 n bits de poids fort dans les circuit S de cet étage.

3. Multiplieur selon l'une quelconque des revendications 1 ou 2, caractérisé en ce que n = 9.

**Patentansprüche**

1. Multiplizierer in Kaskadenausführung, worin eine Gruppe von elementaren Operationen verwendet wird, wovon jeder elementare Operator ein erstes Y-Register (101) zum Empfangen und Ausgeben eines ersten Signals aus wenigstens zwei Bits, ein zweites RI-Register (102) zum Empfangen eines Zwischensignals aus n Bits, ein drittes X-Register (103) zum Empfangen eines Multiplikandensignals aus n Bits und eines Überschneidungsbits und Ausgeben dieses Multiplikandensignals, D- und Q-Decodierschaltungen (112–117) zum Empfangen eines Multiplikatorsignals aus drei Bits und Ausgeben des höchstwertigen Bits dieses Signals, einen Addierer (110), der mit einem Übertrag-Eingang und einem Übertrag-Ausgang versehen ist, und eine S-Schaltung (111) zum Ausgeben eines Multiplikationssignals aus neun Bits, welches nach dem Booth-Algorithmus zwischen den Multiplikanden, dem Zwischensignal und dem Multiplikator erhalten wird, dadurch gekennzeichnet, dass jeder Operator Rechenmittel (108) enthält, die es gestatten, die partiellen Multiplikationen auf Bitgruppen nach dem Booth-Algorithmus anzuwenden, angeschlossen an einen Multiplexer (109), der es gestattet, das partielle Ergebnis auszuwählen, welches für die Verwirklichung der Gesamtrechnung nach diesem Algorithmus benötigt wird, sowie einen Addierer (119) enthält, der mit einem Übertrag-Eingang und einem Übertrag-Ausgang versehen ist, und dass er zur Ausführung wenigstens einer Multiplikation zwischen einem Multiplikanden aus zwei (n−1) Bits und einem Multiplikator aus vier Bits eine erste Stufe enthält, welche einen ersten Operator (0) und einen zweiten Operator (1) umfasst, und eine zweite Stufe enthält, die einen dritten Operator (2) und einen vierten Operator (3) enthält, dass das Überschneidungsbit und das niedrigstwertige Bit des Multiplikatorsignals des ersten Operators auf Null liegen, dass die zwei anderen Bits dieses Multiplikatorsignals die beiden niedrigwertigen Bits des Multiplikators sind, dass das höchstwertige Bit von diesen an den Übertrag-Eingang des ersten Operators angelegt wird, dass das Multiplikatorsignal des zweiten Operators dasselbe wie das des ersten ist, dass das X-Register des ersten Operators die n niedrigwertigen Bits des Multiplikanden empfängt, dass das Überschneidungsbit des zweiten Operators das höchstwertige Bit nachbildet, welches durch dieses X-Register empfangen wird, dass das X-Register des zweiten Operators die anderen Bits des Multiplikanden empfängt, wovon das hochwertige Bit zweimal nachgebildet wird, dass das Zwischensignal der ersten Stufe gleich Null ist, dass das X-Register des ersten Operators die zwei hochwertigen Bits des Multiplikators empfängt, dass der Übertrag-Ausgang des ersten Operators mit dem Übertrag-Eingang des zweiten Operators verbunden ist, dass die D-Schaltungen des dritten und des vierten Operators von dem Y-Register des ersten Operators die zwei hochwertigen Bits des Multiplikators und von einer Q-Schaltung der ersten Stufe die diesen zwei Bits vorausgehenden, niedrigwertigen Bits enpfangen, dass der Übertrag-Eingang des dritten Operators das hochwertige Bit des Multiplikators empfängt, dass der Multiplikand direkt zwischen den Ausgängen der X-Schaltungen des ersten und des zweiten Operators und den Eingängen der X-Schaltungen des dritten und des vierten Operators übertragen wird, dass das Überschneidungsbit des dritten Operators auf Null gehalten wird und das des vierten Operators das hochwertige Bit des X-Registers des dritten Operators nachbildet, dass die zwei niedrigwertigen Bits des Multiplikationssignals des ersten Operators zu den zwei hochwertigen Eingängen des Y-Registers des vierten Operators übertragen werden, dass die anderen Bits dieses Multiplikationssignals sowie das Multiplikationssignal des zweiten Operators zu den RI-Registern der zweiten Stufe mit Verschiebung nach rechts und doppelter Wiederholung des hochwertigen Bits übertragen werden, dass die (m−4) hochwertigen Ausgänge des Y-Registers des ersten Operators und die Ausgänge des Y-Registers des zweiten Operators mit den Eingängen des Y-Registers des dritten Operators und mit den (m−4) niedrigwertigen Eingängen des Y-Registers des vierten Operators verbunden sind und dass der Übertragungs-Ausgang des dritten Operators mit dem Übertrag-Eingang des vierten Operators verbunden ist.

2. Multiplikator nach Anspruch 1, dadurch gekennzeichnet, dass der Multiplikator eine Multiplikation zwischen einem Multiplikanden aus 2 (n−1) Bits, worin n die Anzahl von durch einen elementaren Operator verarbeiteten Bits ist, und einem Multiplikator aus 16 Bits durchführen kann, welcher acht Stufen aufweist, die jeweils zwei Operatoren enthalten, dass die Y-Register wenigstens sieben Bits speichern können und dass die Verbindungen zwischen diesen Stufen gleich mit denen zwischen den zwei ersten Stufen ausgebildet sind, wobei das Multiplikationsergebnis auf 14 niedrigwertigen Bits in den Y-Registern der letzten Stufe und auf den 2 n hochwertigen Bits in den S-Schaltungen dieser Stufe ausgegeben wird.

3. Multiplikator nach einem der Ansprüche 1 oder 2, dadurch gekennzeichnet, dass n = 9.

**Claims**

1. A multiplier of the cascade type utilizing a set of elementary operators, each elementary operator having a first Y register (101) to receive and supply a first signal of at least two bits, a second RI register (102) to receive an intermediate signal of n bits, a third X register (103) to receive a multiplicand signal of n bits and an overlap bit and to supply this multiplicand signal, D and Q decoding circuits (112 to 117) to receive a multiplying signal of three bits and to supply the high value bit of this signal, an adder (110) having a carry input and a carry output, and an S circuit (111) to supply a multiplication signal of nine bits obtained in accordance with Booth's algorithm between the multiplicand, the intermediate signal and the multiplier, characterized in that each operator comprises computing means (108) making it possible to perform partial multiplications on the groups of bits in accordance with Booth's algorithm connected with a multiplexer (109) making it possible to select the partial result necessary for effecting the full computation in accordance with the said algorithm and an adder (11) having an input and a carry output and in that in order to perform at least one multiplication using a multiplicand of 2 (n−1) bits and a multiplier of four bits, it comprises a first stage comprising a first operator (0) an a second operator (1) and a second stage comprising a third operator (2) and a fourth operator (3), in that the overlap bit and the low value bit of the multiplier signal of the first operator are at zero, that the two other bits of this multiplier signal are the two bits of low value of the multiplier, that the bit with the high value of the latter is applied to the carry input of the first operator, that the multiplier signal from the second operator is the same as that of the first one, that the X register of the first operator receives the n bits of low value of the multiplicand, that the overlap bit of the second operator copies the bit of high value received by this X register, that the X register of the second operator receives the other bits of the multiplicand of which the one with the high value is copied twice, that the intermediate signal of the first stage is equal to zero, that the register of the first operator receives the two bits of high value from the multiplier, that the carry output of the first operator is connected with the carry input of the second operator, that the D circuits of the third and the fourth operators receive the two bits of high value from the Y register of the first operator from the multiplier and from a circuit Q of the first stage of low value preceding these two bits, that the carry input of the third operator receives the bit of high value from the multiplier, that the multiplicand is directly transmitted between the outputs of the X circuits of the first and the second operators and the inputs of the X circuits of third and fourth operators, that the overlap bit of the third operator is maintained at zero and that of the fourth operator copies the bit of high value of the X register of the third operator, that the two bits of low value of the multiplication signal of the first operator are transmitted to two inputs of high value of the Y register of the fourth operator, that the other bits of this multiplication signal and the multiplication signal of the second operator are transmitted to the RI registers of the second stage with an offset to the right and a double repetition of the bit of high value, that the (m−4) outputs of high value of the Y register of the first operator and the outputs of the Y register of the second operator are connected with the inputs of the Y register of the third operator and with the (m−4) inputs of low value of the Y register of the fourth operator, and that the carry output of the third operator is connected with the carry input of the fourt operator.

2. The multiplier as claimed in claim 1 characterized in that the said multiplier is able to perform a multiplication involving a multiplicand of 2 (n−1) bits, n being the number of bits handled by an elementary operator and a multiplier of 16 bits, comprising eight stages each having two operators, that the Y registers are able to store at least seven bits, an that the connections between the stages are identical to those between the two first stages; the result of multiplication being represented with the 14 bits of low value in the Y registers of the last stage and the 2 n bits of high value in the S circuits of this stage.

3. The multiplier as claimed in claim 1 or claim 2 characterized in that n = 9.

Fig. 1

Fig.2

Fig.3